(19) Europäisches Patentamt
European Patent Office
Office européen des brevets

(11) EP 0 892 603 B1

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(21) Anmeldenummer: **97918108.8**

(22) Anmeldetag: **04.04.1997**

(51) Int Cl.⁷: **A01N 37/50**
// (A01N37/50, 43:653, 37:50)

(86) Internationale Anmeldenummer:
**PCT/EP97/01686**

(87) Internationale Veröffentlichungsnummer:
**WO 97/37541 (16.10.1997 Gazette 1997/44)**

(54) **FUNGIZIDE MISCHUNGEN**
FUNGICIDAL MIXTURES
MELANGES FUNGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **11.04.1996 DE 19614294**

(43) Veröffentlichungstag der Anmeldung:
**27.01.1999 Patentblatt 1999/04**

(73) Patentinhaber: **BASF AKTIENGESELLSCHAFT**
**67056 Ludwigshafen (DE)**

(72) Erfinder:
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SAUR, Reinhold**
  **D-67459 Böhl-Iggelheim (DE)**
- **SCHELBERGER, Klaus**
  **D-67161 Gönnheim (DE)**
- **VAN GASTEL, Anne**
  **D-67435 Neustadt (DE)**

(56) Entgegenhaltungen:
**EP-A- 0 531 837** **EP-A- 0 645 091**
**EP-A- 0 648 417** **DE-A- 4 309 272**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine fungizide Mischung, welche einen Oximethercarbonsäureester der Formel I,

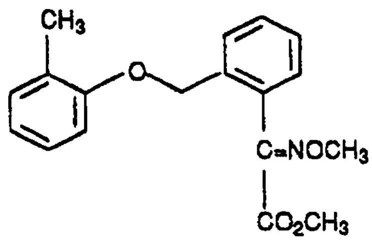

(I)

und ein Oximethercarbonsäureamid der Formel II,

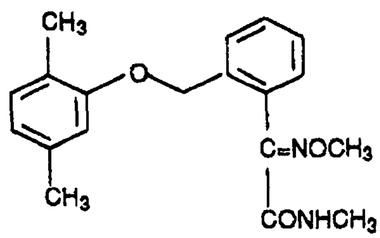

(II)

sowie ein Azol der Formel III

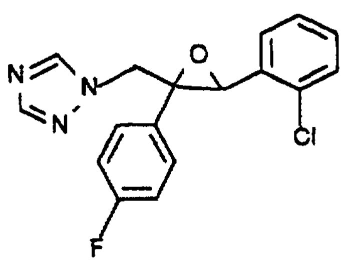

(III)

in einer synergistisch wirksamen Menge enthält.

Außerdem betrifft die Erfindung Verfahren zur Bekämpfung von Schadpilzen mit Mischungen der Verbindungen I, II und III und die Verwendung der Verbindung I, II und III zur Herstellung derartiger Mischungen.

Die Verbindungen der Formeln I und II, ihre Herstellung und ihre Wirkung gegen Schadpilze sind aus der Literatur bekannt (EP-A 253 213, EP-A 398 692, EP-A 477 631).

Ebenfalls bekannt ist die Verbindung der Formel III, ihre Herstellung und ihre Verwendung als Fungizid (vorgeschlagener Handelsname: Epoxiconazol; EP-A 196 038).

EP-A-648417 offenbart fungizide Mischungen enthaltend einen Oximethercarbon-saüreester der Formel (I) und eine Oximethercarbonsaüreamid der Formel (II) in einer synergistisch wirksamen Menge.

EP-A-531837 offenbart fungizide Mischungen enthaltend einen Oximethercarbon-saüreester der Formel (I) und ein Azol wie die Verbindung der Formel (III) in einer synergistisch wirksamen Menge.

EP-A-645091 offenbart fungizide Mischungen enthaltend eine Oximethercarbon-saüreamid der Formel (II) und ein Azol wie die Verbindung der Formel (III) in einer synergistisch wirksamen Menge.

DE-A-4309272 offenbart fungizide Mischungen enthaltend einen Oximethercarbon-saüreester der Formel (I), eine zweite Wirkstoff aus der Gruppe Fenpropimorph, Tridemorph oder Fenpropidin, und ein Azol wie die Verbindung der Formel (III) in einer synergistisch wirksamen Menge.

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische

Mischungen).

Demgemäß wurden die eingangs definierten Mischungen gefunden. Es wurde außerdem gefunden, daß sich bei gleichzeitiger gemeinsamer oder getrennter Anwendung der Verbindungen I, II und III oder bei Anwendung der Verbindungen I, II und III nacheinander Schadpilze besser bekämpfen lassen als mit den Einzelverbindungen.

Die Verbindungen der Formel I und II können in Bezug auf die C=N-Doppelbindung in der E- oder der Z-Konfiguration (in Bezug auf die Gruppierung Carbonsäurefunktion) vorliegen. Demgemäß können sie in der erfindungsgemäßen Mischung jeweils entweder als reines E- oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Bevorzugt setzt man bei der Bereitstellung der Mischungen die reinen Wirkstoffe I, II und III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen können.

Die Mischungen der Verbindungen I, II und III bzw. die gleichzeitige gemeinsame oder getrennte Verwendung der Verbindungen I, II und III zeichnen sich durch eine hervorragende Wirkung gegen ein breites Spektrum von pflanzenpathogenen Pilzen, insbesondere aus der Klasse der Ascomyceten, Deuteromyceten, Basidiomyceten und Phycomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten an Hopfen und Gurken, Alternaria-Arten an Gemüse und Obst sowie Fusarium- und verticillium-Arten.

Sie sind außerdem im Materialschutz (z.B. Holzschutz) anwendbar, beispielsweise gegen Paecilomyces variotii.

Die Verbindungen I, II und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 1:0,1 bis 1:10, vorzugsweise 1:5 bis 1:0,2, insbesondere 1:3 bis 1:0,3 (I:II) angewendet.

Die Verbindungen I und III werden üblicherweise in einem Gewichtsverhältnis von 1:0,1 bis 1:10, vorzugsweise 1:0,1 bis 1:5, insbesondere 1:0,2 bis 1:3 (I:III) angewendet.

Die Aufwandmengen der erfindungsgemäßen Mischungen liegen je nach Art des gewünschten Effekts bei 0,003 bis 3,0 kg/ha, vorzugsweise 0,02 bis 2,0 kg/ha, insbesondere 0,07 bis 1,5 kg/ha.

Die Aufwandmengen liegen dabei für die Verbindungen I bei 0,001 bis 1,0 kg/ha, vorzugsweise 0,05 bis 0,5 kg/ha, insbesondere 0,01 bis 0,3 kg/ha.

Die Aufwandmengen für die Verbindungen II liegen entsprechend bei 0,001 bis 1,0 kg/ha, vorzugsweise 0,05 bis 0,5 kg/ha, insbesondere 0,01 bis 0,3 kg/ha.

Die Aufwandmengen für die Verbindungen III liegen bei 0,001 bis 1,0 kg/ha, vorzugsweise 0,05 bis 1,0 kg/ha, insbesondere 0,05 bis 0,5 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 5 g/kg verwendet.

Sofern für Pflanzen pathogene Schadpilze zu bekämpfen sind erfolgt die getrennte oder gemeinsame Applikation der Verbindungen I, II und III oder der Mischungen aus den Verbindungen I, II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln

und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I, II oder III oder der Mischung aus den Verbindungen I, II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I, II und III. Die Wirkstoffe werden dabei in einer Reinheit von 90% bis 100%, vorzugsweise 95% bis 100% (nach NMR- oder HPLC-Spektrum) eingesetzt.

Die Verbindungen I, II oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt. Die Anwendung kann vor oder nach dem Befall durch die Schadpilze erfolgen.

Die fungizide Wirkung der Verbindungen und der Mischungen läßt sich durch folgende Versuche zeigen:

Die Wirkstoffe werden getrennt oder gemeinsam als 20%-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1 bis 12

Wirksamkeit gegen Weizenmehltau

Blätter von in Töpfen gewachsenen Weizenkeimlingen der Sorte "Frühgold" wurden mit wäßriger Spritzbrühe, die mit einer Stammlösung aus 10 % Wirkstoff, 63 % Cyclohexanon und 27 % Emulgiermittel angesetzt wurde, bis zur Tropfnässe besprüht und 24 Stunden nach dem Antrocknen des Spritzbelages mit Sporen des Weizenmehltaus (Erysiphe graminis var. tritici) bestäubt. Die Versuchspflanzen wurden anschließend im Gewächshaus bei Temperaturen zwischen 20 und 22°C und 75 bis 80 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S.R. (Calculating synergistic and antagonistic responses of herbicide Combinations", Weeds, 15, S. 20 - 22, 1967) ermittelt und mit den beobachteten Wirkungsgraden verglichen.

| Bsp. | Wirkstoff oder Kombinationen | Wirkstoffkonzentration in der Spritzbrühe in ppm | Wirkungsgrad in % der unbehandelten Kontrolle |
|---|---|---|---|
| 1 V | Kontrolle (unbehandelt) | (95 % Befall) | 0 |
| 2 V | I | 1 | 95 |
| | | 0,25 | 0 |
| | | 0,06 | 0 |
| 3 V | II | 1 | 84 |
| | | 0,25 | 34 |
| | | 0,06 | 1 |
| 4 V | III | 0,25 | 34 |
| | | 0,06 | 1 |
| 5 V | I + II<br>(1 : 1) | 1 + 1 | 89 |
| 6 V | I + III<br>(1 : 1) | 0,25 + 0,25 | 45 |
| 7 V | II + III<br>(1 : 1) | 0,25 + 0,25 | 84 |

| Bsp. | Wirkstoffkonzentration in der Spritzbrühe | | beobachteter Wirkungsgrad | berechneter Wirkungsgrad* |
|---|---|---|---|---|
| 8 | (I + II)<br>III | 1 + 1<br>0,06 | 97 | 89 |
| 9 | (I + III)<br>II | 0,25 + 0,25<br>0,06 | 78 | 46 |
| 10 | (I + III)<br>II | 0,25 + 0,25<br>0,25 | 89 | 64 |
| 11 | <br>(II + III) | 0,06<br>0,25 + 0,25 | 92 | 84 |

* nach der Formel von Colby

(fortgesetzt)

| Bsp. | Wirkstoffkonzentration in der Spritzbrühe | | beobachteter Wirkungsgrad | berechneter Wirkungsgrad* |
|---|---|---|---|---|
| 12 | I<br>(II + III) | 0,25<br>0,25 | 90 | 84 |

* nach der Formel von Colby

Aus den Ergebnissen der Versuche geht hervor, daß der beobachtete Wirkungsgrad in allen Mischungsverhältnissen höher ist als der nach der Colby-Formel erwartete Wirkungsgrad.

**Patentansprüche**

**1.** Fungizide Mischung, enthaltend als aktive Bestandteile einen Oximethercarbonsäureester der Formel I,

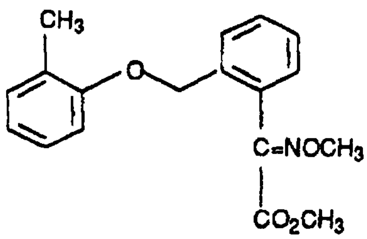

(I)

und ein Oximethercarbonsaureamid der Formel II,

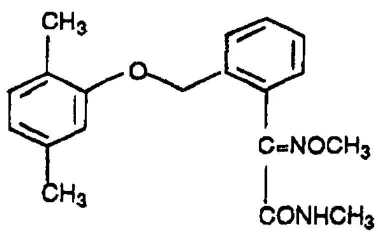

(II)

sowie ein Azol der Formel III

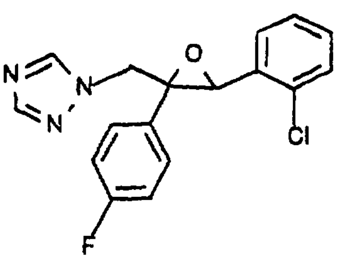

(III)

in einer synergistisch wirksamen Menge.

**2.** Fungizide Mischung nach Anspruch 1, **dadurch gekennzeichnet, daß** das Gewichtsverhältnis der Verbindung I zu der Verbindung II 1:0,1 bis 1:10 beträgt.

**3.** Fungizide Mischung nach Anspruch 1, **dadurch gekennzeichnet, daß** das Gewicht sverhältnis der Verbindung I zu der Verbindung III 1:0,1 bis 1:10 beträgt.

**4.** Fungizide Mischung nach Anspruch 1, **dadurch gekennzeichnet, daß** das Gewichtsverhältnis der Verbindung I

zu der Verbindung II und zu der Verbindung III 1:10:1, 10:1:1 bis 1:1:10 beträgt.

**5.** Fungizide Mischung nach Anspruch 1, die in zwei Teilen konditioniert ist, wobei der eine Teil den Wirkstoff I und/oder III in einem festen oder flüssigen Träger enthält und der andere Teil den Wirkstoff II in einem festen oder flüssigen Träger enthält.

**6.** Fungizide Mischung nach Anspruch 1, die in zwei Teilen konditioniert ist, wobei der eine Teil den Wirkstoff I und/oder II in einem festen oder flüssigen Träger enthält und der andere Teil den Wirkstoff III in einem festen oder flüssigen Träger enthält.

**7.** Fungizide Mischung nach Anspruch 1, die in drei Teilen konditioniert ist, wobei der eine Teil den Wirkstoff I in einem festen oder flüssigen Träger enthält, der andere Teil den Wirkstoff II in einem festen oder flüssigen Träger enthält und der weitere Teil den Wirkstoff III in einem festen oder flüssigen Träger enthält.

**8.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I gemäß Anspruch 1, der Verbindung der Formel II gemäß Anspruch 1 und der Verbindung der Formel III gemäß Anspruch 1 in einer synergistisch wirksamen Menge behandelt.

**9.** Verfahren nach Anspruch 8, **dadurch gekennzeichnet, daß** man die Verbindung I gemäß Anspruch 1 und die Verbindung II gemäß Anspruch 1 und die Verbindung III gemäß Anspruch 1 gleichzeitig gemeinsam oder getrennt oder nacheinander ausbringt.

**10.** Verfahren nach Anspruch 8, **dadurch gekennzeichnet, daß** man die Schadpilze, deren Lebensraum oder die von ihnen freizuhaltenden Pflanzen, Samen, Böden, Flächen, Materialien oder Räume mit 0,001 bis 1,0 kg/ha einer Verbindung I gemäß Anspruch 1 behandelt.

**11.** Verfahren nach Anspruch 8, **dadurch gekennzeichnet, daß** man die Schadpilze, deren Lebensraum oder die von ihnen freizuhaltenden Pflanzen, Samen, Böden, Flächen, Materialien oder Räume mit 0,001 bis 1,0 kg/ha der Verbindung II gemäß Anspruch 1 gemäß Anspruch 1 behandelt.

**12.** Verfahren nach Anspruch 8, **dadurch gekennzeichnet, daß** man die Schadpilze, deren Lebensraum oder die von ihnen freizuhaltenden Pflanzen, Samen, Böden, Flächen, Materialien oder Räume mit 0,001 bis 1,0 kg/ha der Verbindung III gemäß Anspruch 1 gemäß Anspruch 1 behandelt.

**13.** Verwendung einer Verbindung I gemäß Anspruch 1 zur Herstellung von fungizid wirksamen synergistischen Mischungen gemäß Anspruch 1.

**14.** Verwendung der Verbindungen II gemäß Anspruch 1 zur Herstellung von fungizid wirksamen synergistischen Mischungen gemäß Anspruch 1.

**15.** Verwendung der Verbindungen III gemäß Anspruch 1 zur Herstellung von fungizid wirksamen synergistischen Mischungen gemäß Anspruch 1.

## Claims

**1.** A fungicidal mixture comprising, as active components, an oxime ether carboxylate of the formula I

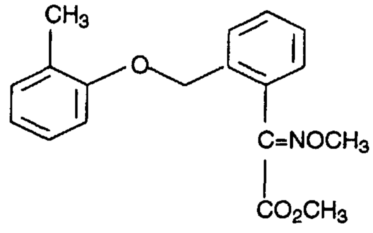

(I)

and an oxime ether carboxamide of the formula II

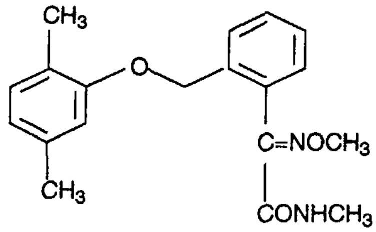

(II)

and also an azole of the formula III

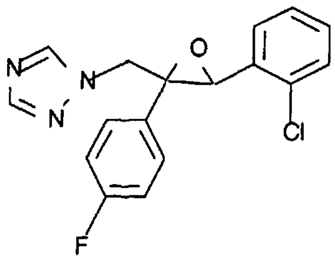

(III)

in a synergistically active amount.

2. A fungicidal mixture as claimed in claim 1 wherein the weight ratio of the compound I to the compound II is 1:0.1 to 1:10.

3. A fungicidal mixture as claimed in claim 1 wherein the weight ratio of the compound I to the compound III is 1:0.1 to 1:10.

4. A fungicidal mixture as claimed in claim 1 wherein the weight ratio of the compound I to the compound II and to the compound III is 1:10:1, 10:1:1 to 1:1:10.

5. A fungicidal mixture as claimed in claim 1 which is conditioned in two parts, one part comprising the active ingredient I and/or III in a solid or liquid carrier and the other part comprising the active ingredient II in a solid or liquid carrier.

6. A fungicidal mixture as claimed in claim 1 which is conditioned in two parts, one part comprising the active ingredient I and/or II in a solid or liquid carrier and the other part comprising the active ingredient III in a solid or liquid carrier.

7. A fungicidal mixture as claimed in claim 1 which is conditioned in three parts, one part comprising the active ingredient I in a solid or liquid carrier, the other part the active ingredient II in a solid or liquid carrier and the remaining part the active ingredient III in a solid or liquid carrier.

8. A method of controlling harmful fungi, which comprises treating the harmful fungi, their environment, or the plants, seeds, soils, areas, materials or spaces to be kept free from them with the compound of the formula I as set forth in claim 1, the compound of the formula II as set forth in claim 1 and the compound of the formula III as set forth in claim 1 in a synergistically active amount.

9. A method as claimed in claim 8, wherein the compound I as set forth in claim 1 and the compound II as set forth in claim 1 and the compound III as set forth in claim 1 are applied simultaneously together or separately or in succession.

10. A method as claimed in claim 8, wherein the harmful fungi, their environment, or the plants, seeds, soils, areas, materials or spaces to be kept free from them are treated with 0.001 to 1.0 kg/ha of a compound I as set forth in claim 1.

**11.** A method as claimed in claim 8, wherein the harmful fungi, their environment, or the plants, seeds, soils, areas, materials or spaces to be kept free from them are treated with 0.001 to 1.0 kg/ha of a compound II as set forth in claim 1.

**12.** A method as claimed in claim 8, wherein the harmful fungi, their environment, or the plants, seeds, soils, areas, materials or spaces to be kept free from them are treated with 0.001 to 1.0 kg/ha of a compound III as set forth in claim 1.

**13.** The use of a compound I as set forth in claim 1 for the preparation of fungicidally active synergistic mixtures as claimed in claim 1.

**14.** The use of a compound II as set forth in claim 1 for the preparation of fungicidally active synergistic mixtures as claimed in claim 1.

**15.** The use of a compound III as set forth in claim 1 for the preparation of fungicidally active synergistic mixtures as claimed in claim 1.

**Revendications**

**1.** Mélange fongicide, contenant comme composants actifs un ester d'acide oxime-éthercarboxylique de formule I,

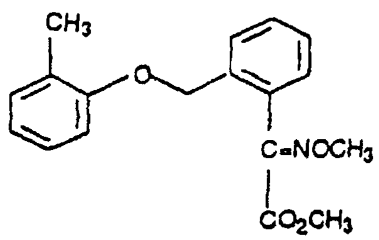

(I)

et un amide d'acide oxime-éthercarboxylique de formule II,

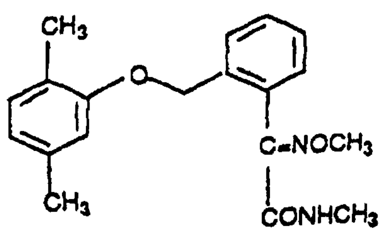

(II)

ainsi qu'un azole de formule III

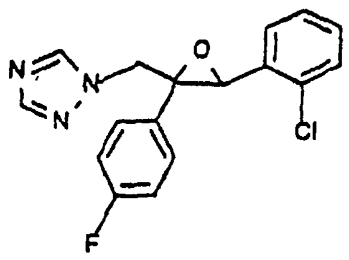

(III)

en une quantité à activité synergique.

**2.** Mélange fongicide selon la revendication 1, **caractérisé par le fait que** le rapport pondéral du composé I au composé II vaut 1:0,1 à 1:10.

**3.** Mélange fongicide selon la revendication 1, **caractérisé par le fait que** le rapport pondéral du composé I au composé III vaut 1:0,1 à 1:10.

**4.** Mélange fongicide selon la revendication 1, **caractérisé par le fait que** le rapport pondéral du composé I au composé II et au composé III vaut 1:10:1 à 1:1:10.

**5.** Mélange fongicide selon la revendication 1, qui est conditionné en deux parties, tandis qu'une partie contient la substance active I et/ou III dans un support solide ou liquide et l'autre partie contient la substance active II dans un support solide ou liquide.

**6.** Mélange fongicide selon la revendication 1, qui est conditionné en deux parties, tandis qu'une partie contient la substance active I et/ou II dans un support solide ou liquide et l'autre partie contient la substance active III dans un support solide ou liquide.

**7.** Mélange fongicide selon la revendication 1, qui est conditionné en trois parties, tandis qu'une partie contient la substance active I dans un support solide ou liquide, l'autre partie contient la substance active II dans un support solide ou liquide, et l'autre partie contient la substance active III dans un support solide ou liquide.

**8.** Procédé pour la lutte contre les champignons nuisibles, **caractérisé par le fait qu'**on traite les champignons nuisibles, leur biotope ou les plantes, semences, sols, surfaces, matériaux ou espaces à rendre exempts de tels champignons, avec le composé de formule I selon la revendication 1, le composé de formule II selon la revendication 1 et le composé de formule III selon la revendication 1, dans une quantité à efficacité synergique.

**9.** Procédé selon la revendication 8, **caractérisé par le fait qu'**on met en oeuvre le composé I selon la revendication 1 et le composé II selon la revendication 1 et le composé III selon la revendication 1 simultanément ensemble ou séparément ou l'un après l'autre.

**10.** Procédé selon la revendication 8, **caractérisé par le fait qu'**on traite les champignons nuisibles, leur biotope ou les plantes, semences, sols, surfaces, matériaux ou espaces à rendre exempts de tels champignons avec 0,001 à 1,0 kg/ha d'un composé I selon la revendication 1.

**11.** Procédé selon la revendication 8, **caractérisé par le fait qu'**on traite les champignons nuisibles, leur biotope ou les plantes, semences, sols, surfaces, matériaux ou espaces à rendre exempts de tels champignons avec 0,001 à 1,0 kg/ha du composé II selon la revendication 1.

**12.** Procédé selon la revendication 8, **caractérisé par le fait qu'**on traite les champignons nuisibles, leur biotope ou les plantes, semences, sols, surfaces, matériaux ou espaces à rendre exempts de tels champignons avec 0,001 à 1,0 kg/ha du composé III selon la revendication 1.

**13.** Utilisation d'un composé I selon la revendication 1 pour la préparation de mélanges synergiques à activité fongicide selon la revendication 1.

**14.** Utilisation d'un composé II selon la revendication 1 pour la préparation de mélanges synergiques à activité fongicide selon la revendication 1.

**15.** Utilisation d'un composé III selon la revendication 1 pour la préparation de mélanges synergiques à activité fongicide selon la revendication 1.